# EUROPEAN PATENT SPECIFICATION

(11) **EP 0 731 640 B1**
(45) Date of publication and mention of the grant of the patent: **05.07.2000**
(21) Application number: 95926380.7
(22) Date of filing: 31.07.1995
(51) Int. Cl.: A22C 25/00, A23N 15/00, A22C 25/08

(54) **PLANT, CONVEYER UNIT AND METHOD FOR PROCESSING FOOD PRODUCTS SUCH AS FRUIT, VEGETABLES, FISH AND MEAT, AND A SPECIFICALLY PROCESSED FOOD PRODUCT**
EINRICHTUNG, FÖRDERER UND VERFAHREN ZUR BEHANDLUNG VON NAHRUNGSPRODUKTEN WIE OBST, GEMÜSE, FISCH UND FLEISCH
INSTALLATION, BANDE TRANSPORTEUSE ET PROCEDE DE TRAITEMENT DE PRODUITS ALIMENTAIRES TELS QUE FRUITS, LEGUMES, POISSONS ET VIANDES, ET PRODUIT ALIMENTAIRE AINSI TRAITE

(30) Priority: 29.07.1994 DK 89394
(43) Date of publication of application: 18.09.1996
(73) Proprietor: CABINPLANT INTERNATIONAL A/S, DK-5683 Haarby (DK)
(72) Inventor: KOFOED, Jesper, 5642 Millinge (DK)
(74) Representative: Nielsen, Henrik Sten
(86) International application number: DK9500319
(87) International publication number: WO9603887

(56) References cited:
- WO-A-89/05585
- DE-B- 1 227 214
- DE-B- 2 927 583
- DE-C- 666 088
- FR-A- 1 188 903
- SE-B- 401 080
- US-A- 3 972 091
- US-A- 4 291 436

## Description

The present invention relates to a plant for processing food products such as fruit, vegetables, fish or meat, comprising a frame including a feeding station for the successive feeding of products, a processing station for the successive processing of products, and a delivery station for the delivery of processed products, transportation means supported by said frame and defining a transportation route extending from said feeding station through said processing station and further to said delivery station, for transporting said products from said feeding station to said processing station and further from said processing station to said delivery station, said transportation means being provided with conveyer means for the individual and successive conveyance of said products, processing means comprised by said processing station, for the successive processing of a part or an area of one or more products, conveyer means comprising a first part and a second part being mutually movable from a first position to a second position, in which first position said first and second part of said conveyer means together support a product, and in which second position said part or said area of a product is at least partially accessible for allowing said processing means to carry out said processing of said part or said area of a given product, said conveyer means comprising individual conveyer units each comprising said first and second part, and positioned equidistantly spaced apart along said transportation route and serving as a support for said respective products.

When processing raw materials or semi-products the food industry frequently faces situations where individual products require processing by cutting off an area or a part of the product.

Being of biological origin, each of the present products varies in shape, unlike e.g. manufactured components which vary within a certain range tolerated by the manufacturer.

Thus, unlike manufactured products the various shapes of the present products, i.e. fruit, vegetables, fish or meat, cannot be controlled in any way, which requires a closer adaptation to the individual product when cutting out an area or a part of the product. Furthermore, the present products are often quite delicate, i.e. they cannot be subjected to massive mechanical processing, including fixation by fixation means during the above mentioned cutting operation, which in many cases further complicates the cutting operation.

An apparatus of the above described kind is known from WO89/05585, which is an apparatus for cutting-off the heads of fish. However, particularly in connection with the processing of fish it has often prooved very difficult partly to cut off a specific desired area in an accurate manner without unintentionally cutting off useful material which should have been retained and not cut off, and partly to cut off the relevant area or the relevant part of the fish in the first place by mechanical cutting means such as rotating knives, as the mechanical cutting off of the relevant area or the relevant part of the fish quite simply cannot be carried out directly.

Thus, in fish it is often difficult to cut off a specific area, e.g. the gills, as is done in connection with the processing of herring, and accordingly, the cutting operation was previously carried out by hand using a conventional knife or a tool as disclosed in DE-A-666088, as it was not possible to handle the extremely vulnerable herring in the known processing plants, which quite simply destroyed the herring by their massive mechanical impact, either imparted by specific holding devices or by the cutting knives which, if the herring is supported, are non-rotating knives which quickly become blunt and therefore deform and will not cut through the herring after a comparatively short time of use.

A special herring product is the so-called matie which in the autumn is sold in very large quantities, especially in Holland. A matie is a moderately salted or cured herring which immediately after having been caught has its gills removed and is then brine-cured for about 2 weeks. A specific feature of the matie is that the herring only has removed its gills, as the stomach of the herring, which contains shrimp fry, must not be perforated, as it is just the content of shrimp fry in the stomach of the herring which gives the matie its specific taste in the process of curing.

Accordingly, it has previously only been possible to produce matie manually, as the known plants for processing food products could not be modified to carry out the particularly delicate cutting off of the herring's gills without simultaneously perforating the stomachs of the herring or cutting off too large meat areas from the herring.

It is the purpose of the present invention to provide a plant for processing food products such as fruit, vegetables, fish or meat, said plant permitting an accurate processing, particularly the cutting off of a specific and closely limited area or a closely limited part of the individual product without simultaneously subjecting the product to physical damage resulting in the complete or partial destruction of the product.

It is a special advantage of the invention that the plant according to the invention permits the processing of food products such as fruit, vegetables, fish or meat, said processing operation being carried out individually for each single product to achieve an accurate cutting off of a specific area or a specific part of the product without simultaneously cutting off unnecessary material from the product and thus wasting valuable food material.

In accordance with the teachings of the invention the above mentioned purpose and the above mentioned advantage, as well as many other purposes and advantages, will appear from the following description of preferred embodiments of the invention, are achieved by a plant for processing food products, such as fruit, vegetables, fish or meat, said plant being characterized in said processing station comprising a cutting station, and said processing means including carrier means for carrying a non-supported part of a product through said cutting station as a supported part of said product is carried through said processing station by said transportation means, said carrier means being adapted to carry said non-supported part of said product through said processing station synchronously with said supported part of said product being carried through said processing station by said transportation means.

It is a characteristic feature of the plant according to the invention that by providing the conveyer means with a first and a second part it is possible to make accessible the part or the area of the product to be subjected to processing, for example a cutting operation in which the part or area is cut off.

Thus, by adapting the first and second part of the conveyer means to the geometry of a given product it is possible to give accession to essentially only the area or the part of the product to be processed, the other parts of the product being supported by the conveyer means of the transportation means which provides for the individual conveyance of the products.

Dependent on the processing in question and dependent on the type and nature of the product in question the plant according to the invention may be continuously or intermittently working, or may alternatively be working both continuously and intermittently, i.e. be working at a continuous minimum conveyance rate which is increased in certain steps and then decreased to the minimum conveyance rate.

Dependent on the type and nature of the product in question and furthermore dependent on the transportation means of the plant the conveyer means may be any conventional conveyer means such as carriers, trays, holders or trough-shaped containers, or the conveyer means may be the conveyer belt of the belt conveyer itself.

The bipartite construction of the conveyer means may thus be formed by e.g. providing two separate conveyer belts which during the major part of the transportation route are running parallel, corresponding to the first position, and which somewhere on their way through the processing station are separated, by lowering and deflecting sideways one of the conveyer belts in order to give access to said part or said area of the individual product.

In accordance with alternative embodiments of the plant according to the invention the individual parts of the conveyer unit can be interconnected or hinged together, the movement of the two parts of the individual conveyer unit in relation to each other being accomplished by a pivoting motion or a parallel displacement or a combination of a pivoting motion and a parallel displacement, dependent on how the given area or part of the food vproduct is to be made accessible.

The movement of the first and second part of the conveyer means from the first position to the second position can be accomplished by any suitable means or devices, for example by electronically controlled means such as solenoids, or by mechanical control of the conveyer means, successively actuating each of the conveyer means immediately upstreams in relation to the processing station.

In accordance with a presently preferred embodiment of the plant according to the invention the plant is provided with actuator means for moving the individual parts of the conveyer unit from the first position to the second position, when the conveyer unit by the transportation means is moved from the feeding station to the processing station, and for moving the parts of the conveyer unit from the second position to the first position, when the conveyer unit by the transportation means is moved from the processing station and to the delivery station. The actuator means can thus be electrical or mechanical means to accomplish the desired movement of the first and second part of the conveyer means from the first to the second position and vice versa.

The actuator means can be comprised by the conveyer means and thus be transported together with the conveyer means when the latter are moved along the transportation route by the transportation means. Alternatively and preferably, the actuator means are in the form of an actuator arm which is stationary in relation to the transportation route, said actuator arm being adapted to engage with the individual conveyer unit to accomplish said movement of the parts of the conveyer unit from the first position to the second position, and the individual conveyer unit is provided with spring means to move the parts of the conveyer unit from the second position to the first position after disengagement of the actuator arm from engagement with the conveyer unit, resulting in a particularly simple, but still reliable construction to accomplish the desired movement of the first and second part of the conveyer means from the first position to the second position and vice versa.

The individual conveyer units preferably comprised by the conveyer means may be formed in a variety of ways, e.g. in the form of subdivided, interconnected constructions using separate coupling and actuator means to accomplish the desired movement of the two parts from the first to the second position.

In the presently preferred embodiment of the plant according to the invention the individual conveyer unit is in the form of a bipartite tray which is moved along the transportation route in an essentially horizontal position by the transportation means of the plant, and the two parts of which constitute said first and second part.

The transportation means can be in the form of any suitable means, such as belt conveyers, chain conveyers, gravity or carrier conveyers, but preferably the transportation means consist of one or more conveyer belts.

When feeding the product to the conveyer means in the conveyer station it sometimes happens that a product is positioned in a wrong way, either the mechanical feeding of the individual product to the conveyer means or the manual positioning of the individual products on the conveyer means resulting in a generally wrong orientation of the product in relation to the desired orientation or in a minor deviation from the planned and desired correct positioning of the product in relation to the conveyer means.

To ensure that all products are correctly positioned in relation to the conveyer means the plant is preferably provided with further positioning means, supported by the frame and adapted to position the products in a given position in relation to the conveyer means.

To ensure that products which have not been positioned correctly in relation to the conveyer means, are not conveyed from the feeding station to the processing station, which might result in an interruption and even an operational stop, the plant according to the invention is preferably provided with further registration means, supported by the frame and adapted to register the position of a given product in relation to the conveyer means. Furthermore, the registration means are preferably adapted to register a characteristic feature of the product in order to facilitate the determination of the position of a given product in relation to the conveyer means, thus improving and ensuring that incorrectly positioned products are not moved to the processing station.

In order to remove products which have not been positioned correctly in relation to the conveyer means the plant is preferably provided with further removal means adapted to remove products which have not been positioned correctly in relation to the conveyer means. Alternatively, said removal means may be in the form of sorting means which may be positioned upstreams or downstreams in relation to the processing station and are connected to the registration means to sort out the products individually in accordance with the feature of the individual product registered by the registration means.

Dependent on the desired registration accuracy the registration means can be any registration means such as electrical eller electronical registration or measuring means such as capacitive, inductive or resistive sensors complete with measuring electronics.

Alternatively and preferably, the registration means are optical registration means, preferably video registration means.

In order to improve the sorting of products into correctly and incorrectly positioned products, and furthermore according to the feature of the individual product registered by the registration means the plant according to the invention is preferably provided with further data processing means, connected with the registration means and the processing means and comprising converter means to convert the registration of a given product carried out by the registration means into data for controlling the position of the processing means in relation to the conveyer means to provide an individual processing of the product in accordance with the registration of said feature of the product carried out by the registration means.

Realizing the fact that products of the present type, i.e. food products such as fruit, vegetables, fish or meat, e.g. herring to be processed into matie, are very individual og vary a great deal, and also realizing the fact that a given feature of a product, e.g. the position of the gills in a fish, cannot be determined unanimously by measurement, the data processing means of the plant according to the invention are preferably adapted to compare the data obtained by converting into data the registration carried out by the registration means, with reference data determining empirically determined relations between various features of the products in question and a specific feature which will have to be determined in order to define said part or said area to be processed by the processing means.

This results in a more precise and more accurate determination of the desired feature - not merely on the basis of a single measurement - but based on a precise calculation compared to one or more measurements in accordance with empirically defined or determined relations for the type of product in question.

The transportation means of the plant according to the invention can be adapted to convey a given number of products from the feeding station through the processing station and further to the delivery station, followed by returning the transportation means along the transportation route, before repeating the conveyance of the above named number of products from the feeding station through the processing station and further to the delivery station.

However, preferably the transportation means are so-called endless loop transportation means, said transportation route comprising a return route leading from the delivery station to the station along which the conveyer means are returned to the feeding station from the delivery station after delivery of the processed products, and preferably the plant is further provided with cleaning means, supported by the frame and positioned at said return route immediately upstreams in relation to the feeding station.

According to the invention the carrier means for conveyance of the non-supported part of the product may comprise a mandrel which may be provided with an exterior thread, the lead of which together with the rotation of the mandrel is adapted to the conveyer rate of the transportation means. In this manner a synchronous conveyance of said non-supported part of the product and the supported part of the product is achived.

At its free engaging end the mandrel is provided with a first, conical thread, succeded by a cylindrical section, which is succeeded by a conical section, said cutting means being positioned in connection with the latter conical section.

According to one embodiment of the invention the cutting means of the cutting station can be in the form of two rotating, circular knives. The rotational axes of said knives are preferably positioned in one and the same plane, essentially perpendicular to the direction of conveyance of the product through the cutting station. Thus, the rotational axes of the cutting means are perpendicular to each other to provide the individual product with an essentially triangular cut having a top angle of 30°-120°, preferably 45°-105°, e.g. 90°.

In order to deflect the cut-off section of an individual food product there may be provided deflecting means, deflecting the cut-off section, e.g. by suction or by means of a stream of a pressurized fluid.

The cutting station according to the invention may also comprise carrier means in the form of a driven belt providing a support for a section of the non-supported part of the product. Furthermore, the cutting station can comprise one or more fluid-providing means, the non-supported part of the product being supported by this fluid when the processing has been completed.

Furthermore, the cutting station according to the invention can comprise positioning means for positioning a carrier means, e.g. the mandrel, and cutting means in a given position in relation to a food product which by the conveyer means is conveyed to the cutting station.

In a specific aspect of the present invention the processed food product has been produced in accordance with the teachings of the invention by using the plant according to the invention, and preferably processed in the cutting station according to the invention.

The processed food product according to the invention, such as fruit, vegetables, fish or meat, being processed by the plant according to the invention described above and having a part or an area of the individual product has been cut off, characterized in sharp, mechanically produced cuts in the product, the cuts forming an essentially triangular cut in the individual product, the triangular cut being formed by two plane cuts forming an angle of 30°-120°, preferably 45°-105°, e.g. 90°, the cuts being interconnected in the product by a circular arc.

It is particularly advantageous if the food product to be processed is a herring, as the cutting off of the herring's gill area, resulting in sharp, mechanically produced cuts connected by a circular arc, provides an optimally processed herring with minimal waste of material. As a result of said processing this herring is particularly suitable for the production of the so-called matie, as it is essential for the production of this type of herring to remove the herring's gill area without simultaneously loosing useful food material or perforating the stomach of the herring.

The known semi-manual methods for the production of matie comprise i.a. the removal of the gill area of the fish by tearing it out and accordingly, these production methods are particularly inaccurate. According to the invention, on the contrary, the gill area of the herring is removed by sharp, well-defined and mechanically produced cuts connected by a circular arc making the thus processed herring particularly well-suited for a possible further processing, including curing, for the production of matie. The cutting operation according to the invention provides a particularly efficient and reliable cutting off of undesired gill material, simultaneously avoiding the loss of useful material and damage to the fish. It is observed that by interconnecting the cuts by a circular arc the processed herring is not damaged by cuts extending into the fish from the cut-off area. The circular arc can be provided by a mandrel virtually threading the herring at the gills, said plane cuts being provided by rotating knives.

In accordance with a further aspect of the present invention the above mentioned purpose and the above mentioned advantage, as well as many other purposes and advantages which will appear from the following detailed description of preferred embodiments of the invention, are achieved by a method for processing food products, such as fruit, vegetables, fish or meat, said method comprising the steps of:
feeding said products successively to a feeding station,
transporting said products by transportation means along a transportation route from said feeding station, through a processing station for the successive processing of said products, and further to a delivery station for the delivery of said processed products, said transportation means being provided with conveyer means for said individual and successive conveyance of said products, and being provided with a first part and a second part which are mutually movable from a first position to a second position, in which first position said first and second part of said conveyer means together support a product, and in which second position a part or an area of a product is accessible at least partially, said conveyer means comprising individual conveyer units each comprising said first and second part, and positioned mutually equidistantly along said transportation route, serving as a support for said respective product, characterized in
successively processing said products in said processing station comprising a cutting station by processing means including carrier means carrying a non-supported part of a product through said cutting station as a supported part of said product is carried through said cutting station by said transportation means, said carrier means being adapted to carry said non-supported part of said product through said cutting station synchronously with said supported part of said product carried by said transportation means, said conveyer means during processing in said processing station being moved from said first position to said second position for allowing said processing means to carry out said processing af said part or said area of a given product.

The method according to a further aspect of the invention can be implemented in accordance with the above stated plant according to the invention so as to utilize the specific features and advantages of the plant and the cutting station according to the invention in processing of the products by the method according to the invention.

In the following the invention will be further explained with reference to the drawing, in which
fig. 1 is a schematic and perspective view of a first part of a plant according to the invention for processing herring in a first part of a process for the production of the so-called matie,
fig. 2 is a schematic and perspectiv view of a second part of the plant according to the invention, the first part being shown in fig. 1,
fig. 3 is a schematic and perspective view of a cutting station in the second part of the plant shown in fig. 2, on a larger scale and showing further details of the cutting station,
fig. 4 shows a herring being subjected to a cutting process in the cutting station shown in fig. 3, removing the herring's gill area,
fig. 5 is a perspective view of a herring the gill area of which has been removed by the cutting process shown in fig. 4,
figs. 6 and 7 show a conveyer unit of the plant shown in figs. 1 and 2, said conveyer unit being in the form of a bipartite tray supporting the herring shown in fig. 4,
fig. 8 is a block diagram of the control system of the plant according to the invention shown in figs. 1 and 2, and
fig. 9 shows a detail of a modified plant, which, corresponding to the plant shown in figs. 1 and 2, is used for processing flatfish, particularly plaice, cutting off the heads.

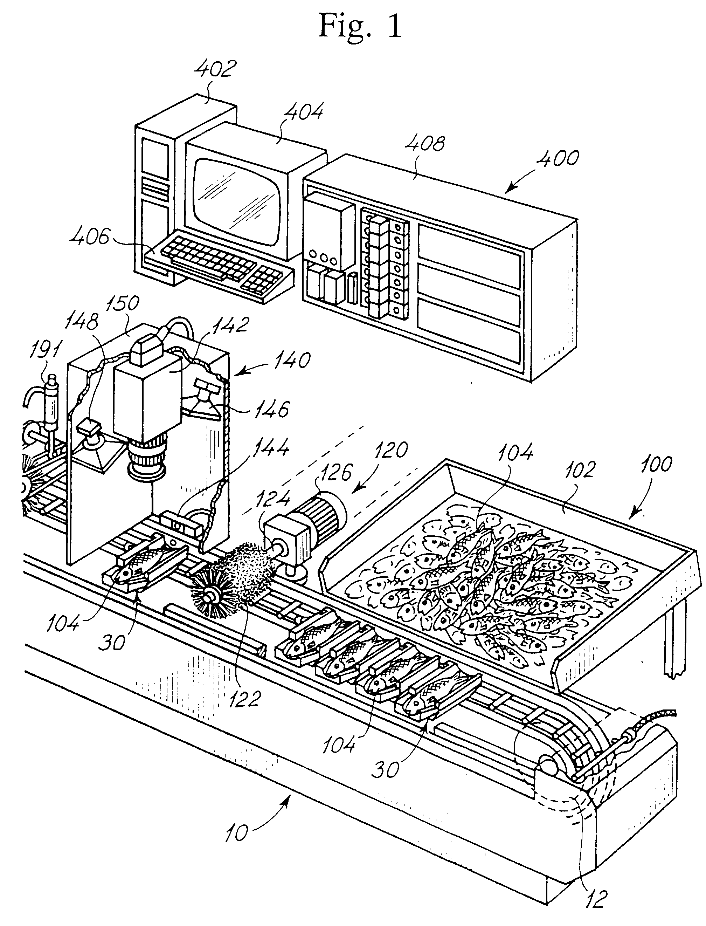

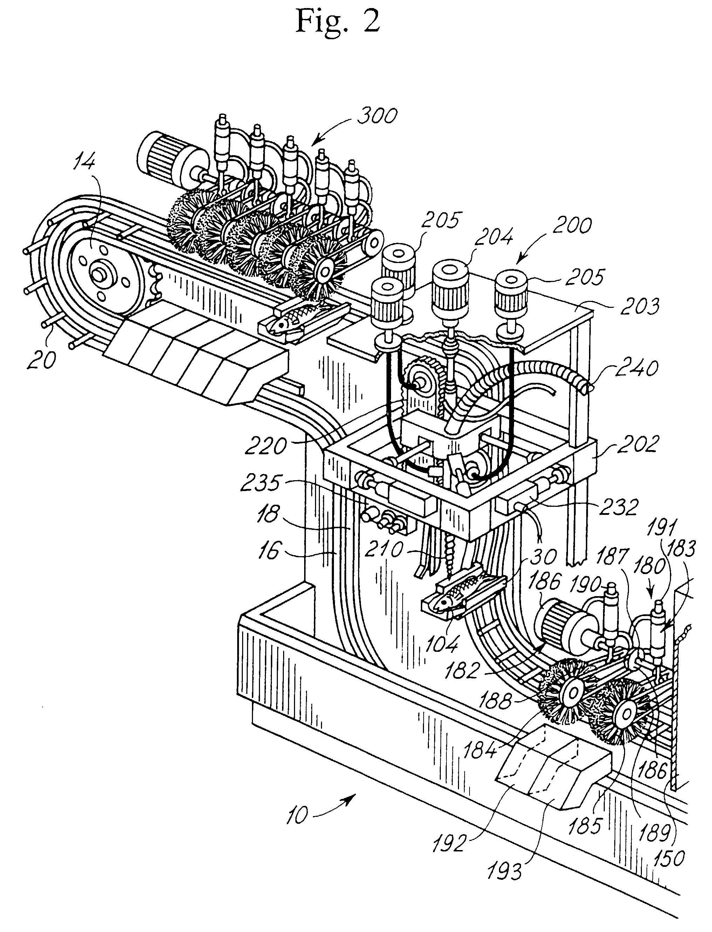

Figs. 1 and 2 show a plant according to the invention for the automatic processing of herring, particularly for the automatic removal of the herring's gill area, said herring then being placed in brine where it is cured to produce the so-called matie.

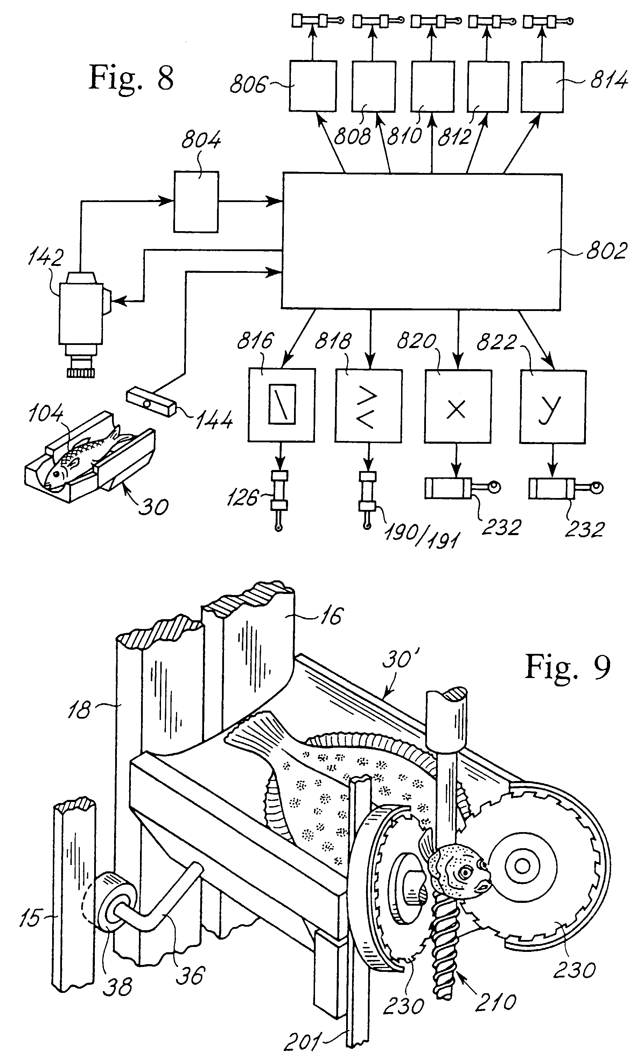

The plant comprises a transportation section 10 which will be described in more detail below, and comprising essentially three stations: A feeding station 100, a processing station 200 and a delivery station 300, said feeding station 100 further comprising three subsections, more particularly a positioning station 120, a video registration station 140 and a removal section 180. Furthermore, fig. 1 shows data processing means 400 responsible for the central control of the entire plant as will be explained below and as schematically shown in fig. 8.

The transportation section 10 comprises an endless chain conveyer moving around two sprockets 12, 14, sprocket 12 being shown in fig. 1 and sprocket 14 being shown in fig. 2. The chain conveyer is moved along guideways formed by two guide rails 16 and 18, said chain conveyer being provided with a total of 150 supporting pins 20 guided between the rails 16 and 18 and adapted to receive a corresponding number of support trays, each receiving and supporting a herring.

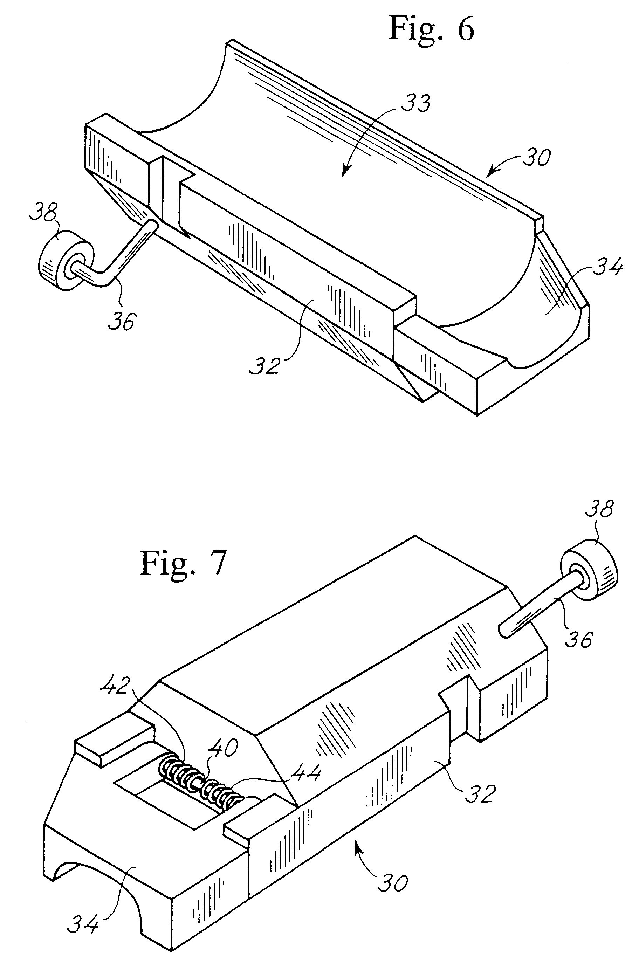

In fig. 1 a tray of this kind is shown at 30, and said tray 30 will be described in more detail below in connection with figs. 6 and 7. The individual tray 30, as shown in figs. 6 and 7 and fig. 3, is a bipartite construction comprising a larger, trough-shaped part 32 defining an interior receiving cavity 33 adapted to receive and support a herring, and a second part 34, which is movable in relation to said first part 32 to allow part 34 to move downwardly from a position as shown in fig. 6, in which position part 34 forms an extension of the trough-shaped part 32. Unlike part 34 the trough-shaped part 32 is provided with an axial hole adapted for mounting tray 30 on the corresponding supporting pin 20. From one side of the trough-shaped part 32 a 90° arm 36 slopes downwardly, said arm being provided with a guide wheel 38 cooperating with the above stated guideway so as to retain said trays 30 during transportation through all the stations of the transportation section 10, and also during transportation vertically upwards through the processing station 20, in a position that allows a herring supported on the larger, trough-shaped part 33 to be kept essentially horizontal and thus not to glide or otherwise change position in relation to said tray 30 or said trough-shaped part 32.

The feeding station 100 is mounted on a table 102 supporting a number of herrings, one herring being shown at 104. The operators which are standing at the transportation section 10 opposite table 102 take a herring and place it on one of the trays 30, the herring being positioned as shown in fig. 1 with the head protruding from said trough-shaped part 32 and overlapping part 34 which thus supports the head and the gill area of the herring. The herrings are positioned with the dorsal fin pointing to the left and the belly pointing to the right as shown in fig. 1, thus ensuring that all herrings are in the same position in relation to the supporting tray 30, which is essential for the following processing of the individual herring in the processing station 200. A herring placed on the first tray in station 100 is shown at 104.

The positioning station 120 is provided with a brush means comprising a brush 122 mounted on a shaft 124 of an electrical motor 126. The shaft 124 of said electrical motor 126 and consequently the brush 122 extends at a small angle relative to the perpendicular to the trays 30 and thus to the transportation direction of the herring. This arrangement of the shaft 124 relative to the trays and the conveyance direction of the herrings 104 ensures that said brush 122 by its rotation pushes the herrings all to the left and forward into the appropriate tray until they meet a stop or "nose stop" in the form of a stationary flange mounted on the frame to ensure that all the herrings are positioned in the same manner in relation to the supporting tray.

The video registration station 120 registeres a black/white picture of the herring positioned below a video camera 122, said positioning of a herring 104 on a tray 30 below said video camera 142 being detected by a detector 144, said detector, like the other elements of the plant, including the electrical motor 126 and the video camera 142, communicating with the data processing means in block 400. Together with two illumination lamps 146, 148 said video camera 142 is contained in a screened box 150.

It is pointed out that the registration carried out by the video camera 142 can both be an RGB (red/green/blue), i.e. a registration representing colours and a black/white registration. Tests have shown that the best resolution - and thus the best control data - for identifying the gill area of a herring is obtained by a black/white registration with the herring being supported on a white-coloured tray, which provides the strongest contrast between the dorsal area of the herring and the supporting surface. Doubtlessly, the identification of other product types and the identification of another specific area of a product, e.g. a fin area or a tail area, can in other connections advantageously be carried out by either colour registration, i.e. RGB registration, or by a black/white registration of the product on a background with a different colour, e.g. a black background.

Apart from providing data for the identification of the gill area of the herring 104, positioned below said video camera 142, the purpose of the registration by said video camera 142 is to determine the total amount of herring and optionally also other irregularities, using the data processing means in section 400 to carry out a data processing on the basis of said video registration carried out by said video camera 142 in order to determine whether said herring 104 complies with or deviates from further detailed criteria reflecting empirical data representative for a "normal" herring.

If the herring is too long or too short it is removed from the plant in the removal section 180, comprising two removal units 182 and 183 adapted to sort out herrings which either are too large or too small in relation to a maximum and minimum length for herrings which may be processed in the plant. Each of said units 182 and 183 comprises a vertically movable, belt-driven brush 184 and 185, respectively, said brushes 184 and 185 being driven by a common electrical motor 186 comprising a shaft 187 provided with two belt pulleys, one of which is shown at 186, said belt pulleys being adapted to drive belts 188 and 189 driving said rotating brushes 184 and 185, repectively. Said brushes 184 and 185 are supported on arms, which are not shown in detail, and said arms may be lifted and lowered by means of hydraulic motors 190 and 191, thus being adapted to lifting and lowering said rotating brushes 184 and 185.

More particular, said hydraulic motors 190 and 191 are adapted to lower the respective rotating brushes 184 or 185 from a starting position so that the respective brush grips the side of a herring positioned under said rotating brush, the rotating brush so to speak brushing the herring forward and out of the supporting tray and down into a corresponding container 192 or 193. Upon activation of the hydraulic motors 190 or 191 the corresponding rotating brush 184 or 185 is lifted again so that herrings moved in under the rotating brushes 184 or 185 can pass freely without being removed from the plant.

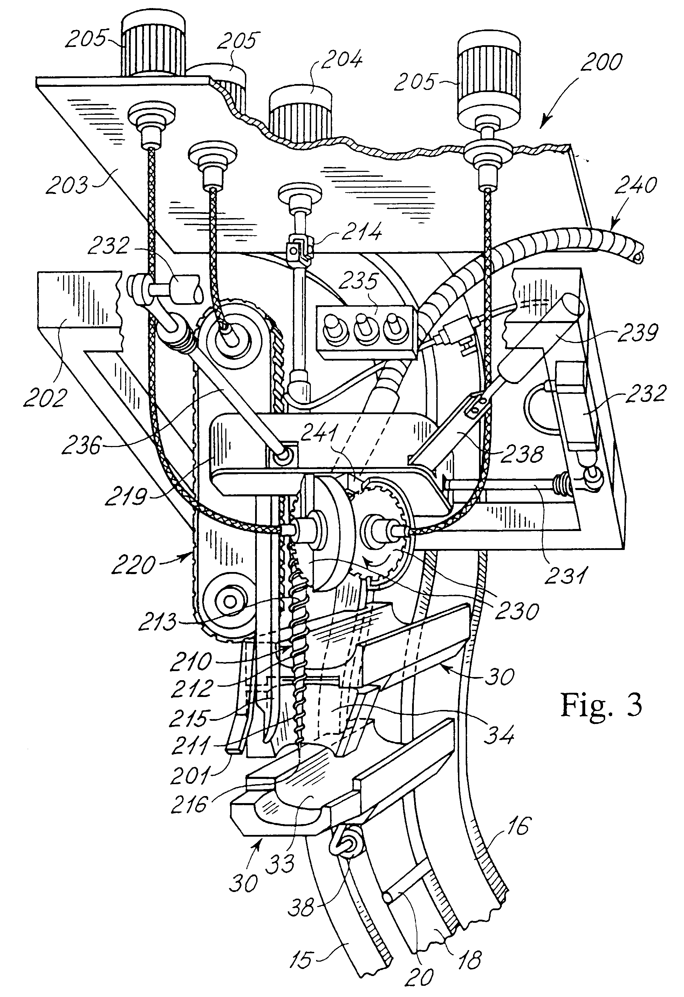

The processing station 200 shown in fig. 2 is shown in more detail in fig. 3. More particularly, the processing station 200 is in the form of a cutting station for the individual and successive cut-processing of the food products conveyed by the conveyer means.

As shown in fig. 3 the conveyer means are moved along a vertical section of the guideways 16, 18 at the processing station, the trough-shaped part 32 of said tray 30 being essentially horizontal.

The cutting station comprises a processing unit 219 comprising cutting knives 230 and various carrier means 210, 220 adapted to carry a non-supported part of a herring through the cutting station, a part of the herring still being supported by the trough-shaped part 32 of the conveyer means 30. A first carrier means is in the form of a mandrel 210, the free engaging end of which is provided with a first, conical thread 211, followed by a cylindrical section 212, which is followed by a conical section 213. Furthermore a carrier means 220 is provided in the form of a driven conveyer belt which also supports a part of the herring. Furthermore, there is provided a set of rotating, circular knives 230, the rotational axes of which are extending in a common plane and define a given angle where they intersect. The cutting knives are arranged tangentially to the mandrel in the area of its conical section 213 where the thread ends, and rotate in a direction contributing to the upward motion of the herring, cf. the arrow shown in fig. 3.

The cutting station 200 comprises support frames 202 and 203, said support frame 202 i.a. comprising control means 236 and 231 for controlling the position of the carrier means 210, 220 and the cutting means in a xy plane. Controlling this position is essential as the tip of the mandrel 216 is to hit the herring precisely within a predetermined area of the herring. The support frame 203 supports the necessary driving motors for the cutting station, including a motor 204 driving the mandrel via a cardan joint, and the driving motors 205 for the carrier means 220 and the knives 230.

The processing unit 219 with the cutting knives 210, the conveyer belt 220 and the mandrel 210 are via an extension of the mandrel 210 mounted on a cardan joint 214 and may thus be moved in an imaginary horizontal xy plane, the unit being connected to a stabilizing and moment-transmitting flat bar 238, connected to the frame 202 via a coupling 239. The position of the unit within the xy plane is carried out by control means 236 or 231 driven by an AC servo-motor 232 connected to the data processing means. Thus, the adaptation of the processing unit 219 within the xy plane is based on the data registered by the registration means.

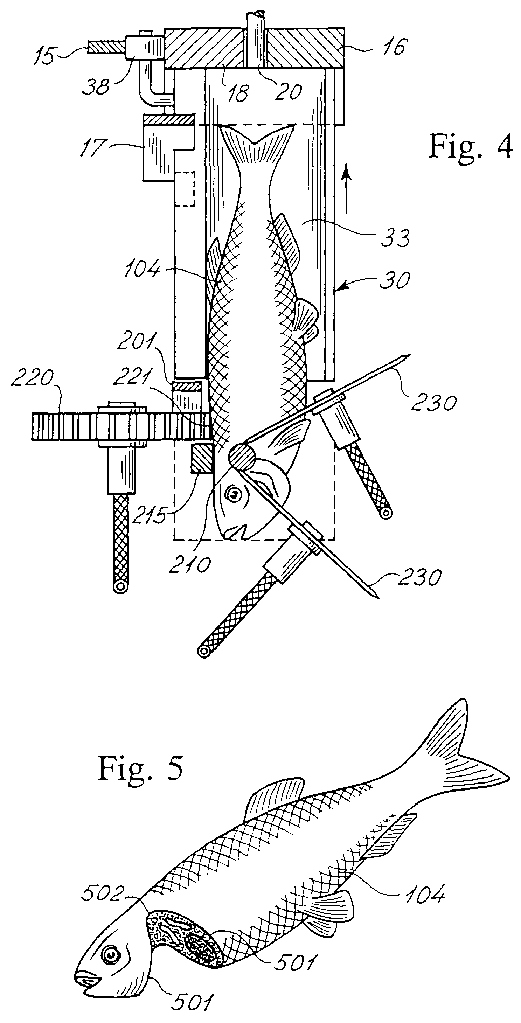

When operating the plant each of the herrings is conveyed on an individual tray. As the herring is conveyed into the vertical section by the guideways it is penetrated by the end 211 of the mandrel 210 which immediately before has been positioned in a pre-determined position in relation to the head of the herring by control means 236, 231. Simultaneously, part 34 of said tray 30, being adapted to support the head of the herring, meets a protruding flange part 201 positioned in the processing station, said flange part forcing part 34 downwards from the position shown in fig. 6 to a position shown in fig. 3, where part 34 is almost perpendicular to the trough-shaped part 32. Hereby the part of the herring to be processed is made accessible while being supported at the back by a flange 215, and is conveyed further on by said mandrel 210, the ascent of which, as well as its rotational rate, is adapted to the conveyance rate of the tray, thus continuing to convey the part of the fish which is no longer supported by the tray, in extension of the supported part of the herring. The accessible sections of the herring are so to speak threaded upwards on the mandrel towards the two rotating, circular knives 230, the mandrel so to speak pressing out the herring's gill at the conical thread 211, 213. Dependent on the length of the mandrel a given number of herrings will be positioned on the mandrel at at given time. To ensure the conveyance of the trays 30 past the knives 230 a flange 17 is arranged at the guideway, said flange, as shown in fig. 4, engaging a complementary recess in the tray 30 and forcing the tray into the direction indicated by the arrow into a recessed position in relation to the mandrel, making the herring virtually glide on the surface of the tray.

To further convey the herring a carrier means is arranged at the side of the mandrel opposite to the knives and in the area around the knives 230, said carrier means being in the form of a driven belt having a coating to increase friction, thus supporting the dorsal part of the herring from the area where it is being processed by cutting. Thus, said carrier means 220 supports the head of the herring as it reaches the rotating cutting means, and supports the processed part of the herring product which is conveyed between the mandrel and the belt. The conveyance rate of the belt is adapted to that of the trays and thus that of the herring's body and tail by means of a synchronizing mechanism 235. The head of the herring may be moved in a slightly raised or lowered position relative to the rest of the body. The passage of the herring past the cutting knives is shown in fig. 4, showing a herring the body and tail part of which is placed on a trough-shaped tray part 33, the head and gills of the herring protruding from the exterior end of part 32 and here being supported by said carrier means 220, which as mentioned above is in the form of a driven belt supporting the dorsal part of the herring at point 221.

As will appear from the drawing a set of cuts are made by the rotating knives, said rotating knives being positioned adjacent to the mandrel, thus providing the processed herring product shown in fig. 5, the gill area of which has been cut out.

The cutting means 230 provide the fish with the cut shown in fig. 5. As shown, the cut is formed from plane cuts 501 and an arcuate cut 502, the two cuts 501 extending at 90° to one another. After the cut is completed the fish is conveyed further upwards until the belt ends. At this point the herring meets an upwardly directed fluid stream such as pressurized air, which is activated by a sensor and so to speak carries the non-supported part of the herring until the processing station is disenganged from the exterior part 34 of the tray and said part, by the springs 40 positioned on the lower surface, assumes its original normal position, which is shown in fig. 6, the trays furthermore having been moved forward from the above-mentioned withdrawn position.

The removal of the cut-off section of the herring by suction is implemented by a suction means 240 in the form of a tube, the orifice 241 of which is positioned at the rotating knives 230, said suction means removing the cut-off sections by vacuum-suction and leading them to e.g. a cyclone.

The delivery section 300 comprises various motor-driven brushes adapted to sorting the processed herrings according to length, a brush being activated by the data processing means 400 which from the video registration station 140 has been informed about the length of the herring. Each brush corresponds to a herring of a specific length within a given interval of length, and the corresponding brush is actuated upon the arrival of the herring, brushing it to a reservoir. The brushes are supported by arms that may be raised or lowered by hydraulic cylinders as explained with reference to the removal units 182 and 183.

As explained above, section 400 is a section comprising a data processing means which is responsible for the central control of the entire plant. More particularly, section 400 comprises a mini computer or PC 402 communicating with a display 402 and a keyboard 406 as well as an interface and an activator box 408, partly comprising various converters, e.g. a converter converting the video signal registered by the video camera 142 for a given herring, into data to be processed by the mini computer or PC 402, and partly comprising interface relays for controlling e.g. the above mentioned hydraulic motors 190 and 191 and activating/deactivating the individual motors, relays, etc. comprised by the plant.

Fig. 8 shows a block diagram for the central control of the plant. The central control means or CPU of the mini computer or PC 402 is shown at 802 and communicates, as shown in fig. 8, partly with various data-generated sources, e.g. said detector 144 and said video camera 142, coupled to said CPU 802 via an interface box 804, said CPU 802 simultaneously controlling the individual actuators and motors of the plant, including the video camera 142 which is addressed by said CPU 802 when the presence of a herring 104 supported on a tray 30 is detected below said video camera 142 by said detector 144 as described above, and partly with a number of relay or interface blocks 806, 808, 810, 812, 814, 816, 818, 820 and 822. The interface blocks 806...822 are in turn connected to corresponding actuators or motors. The blocks 816 and 818 are accordingly connected to the actuators 191 and 190 respectively, while blocks 820 and 822 are connected to the xy-motors in the cutting station. Blocks 806-814 control the brushes in the delivery station 300.

As shown in fig. 9, the invention is not limited for use with herring. The plant, cutting station, the conveyer unit and the method according to the invention may thus be used for processing a variety of food products such as flatfish.

## Claims

1. A plant for processing food products, such as fruit, vegetables, fish or meat, comprising
a frame including a feeding station (100) for the successive feeding of products, a processing station (200) for the successive processing of products, and a delivery station (300) for the delivery of processed products,
transportation means supported by said frame and defining a transportation route extending from said feeding station (100) through said processing station (200) and further to said delivery station (300), for transporting said products from said feeding station (100) to said processing station (200) and further from said processing station (200) to said delivery station (300), said transportation means being provided with conveyer means for the individual and successive conveyance of said products,
processing means comprised by said processing station (200), for the successive processing of a part or an area of one or more products,
conveyer means comprising a first part (32) and a second part (34) being mutually movable from a first position to a second position, in which first position said first (32) and second part (34) of said conveyer means together support a product, and in which second position said part or said area of a product is at least partially accessible for allowing said processing means to carry out said processing of said part or said area of a given product, said conveyer means comprising individual conveyer units (30) each comprising said first (32) and second part (34), and positioned equidistantly spaced apart along said transportation route and serving as a support for said respective products, characterized in
said processing station (200) comprising a cutting station, and
said processing means including carrier means (210) for carrying a non-supported part of a product through said cutting station (200) as a supported part of said product is carried through said processing station (200) by said transportation means, said carrier means (210) being adapted to carry said non-supported part of said product through said processing station (200) synchronously with said supported part of said product being carried through said processing station by said transportation means.

2. The plant according to claim 1, said transportation means conveying said products in an essentially continuous movement or in an intermittent movement, or alternatively a combination of a continuous and an intermittent movement.

3. The plant according to any of claims 1 or 2, said individual conveyer unit (30) being constituted by a bipartite tray including said first (32) and second part (34) and being movable by said transportation means along said transportation route in an essentially horizontal position.

4. The plant according to any of claims 1-3, said individual parts of said conveyer unit (30) being interconnected.

5. The plant according to claim 4, said individual parts of said conveyer unit (30) being hinged together.

6. The plant according to claims 4 or 5, further comprising actuator means for moving said parts of said individual conveyer units (30) from said first position to said second position when said conveyer unit (30) is moved by said transportation means from said feeding station (100) to said processing station (200), and for moving said parts of said conveyer unit (30) from said second position to said first position when said conveyer unit (30) is moved by said transportation means from said processing station (200) to said delivery station (300).

7. The plant according to claim 6, said actuator means including an actuator arm (201) which is stationary in relation to said transportation route for engaging said individual conveyer unit (30) to achieve said movement of said parts of said conveyer unit (30) from said first position to said second position, and said individual conveyer unit (30) including spring means (40, 42, 44) for moving said parts of said conveyer unit (30) from said second position to said first position after disengagement of said actuator arm (201) from said conveyer unit (30).

8. The plant according to any of the preceding claims, said transportation means being constituted by one or more conveyer belts.

9. The plant according to any of the preceding claims, further comprising positioning means supported by said frame and adapted to position said products in a given position in relation to said conveyer means.

10. The plant according to any of the preceding claims, further comprising registration means (140) supported by said frame and adapted to registrate said position of a given product in relation to said conveyer means.

11. The plant according to claim 10, said registration means (140) being positioned upstreams in relation to said processing station (200) for registering a characteristic feature of said individual product.

12. The plant according to claim 11, further comprising sorting means positioned upstreams or downstreams in relation to said processing station (200) and connected to said registration means to sort out said products individually in accordance with the individual features of said products registered by said registration means.

13. The plant according to any of claims 11 or 12, further comprising data processing means (400) connected to said registration means (140) and said processing means and comprising converter means for converting the registration of a given product carried out by said registration means (140) into data for controlling the position of said processing means in relation to said conveyer means for achieving an individual processing of said product in accordance with said feature of said product registered by said registration means (140).

14. The plant according to claim 13, said data processing means comparing the data obtained by converting into data the registration of a given product with reference data determining empirically determined relations between various features of said individual products and a specific feature to be determined for defining said part or said area to be processed by said processing means.

15. The plant according to any of claims 9-13, said registration means being constituted by optical registration means, preferably video registration means (142).

16. The plant according to any of the preceding claims, said transportation route defined by said transportation means comprising a return route extending from said delivery station (300) to said feeding station (100) and along which said conveyer means are returned from said delivery station (300) to said feeding station (100) after having delivered said processed products, and further comprising cleaning means supported by said frame and positioned at said return route immediately upstreams in relation to said feeding station (100).

17. The plant according to any of the preceding claims, said carrier means (210) comprising a mandrel provided with an exterior thread, the lead of which together with the rotation of said mandrel being adjusted to the conveyance rate of said transportation means for obtaining said synchronous conveyance of said non-supported part of said product and said supported part of said product.

18. The plant according to claim 17, said free engaging end of said mandrel being provided with a first, conical thread (211), followed by a cylindrical section (212), which is followed by a conical section (213), and that said cutting means are positioned in connection with said latter conical section (213).

19. The plant according to any of the preceding claims, said processing means comprising a cutting station (200) including cutting means for cutting off said part or said area of said individual product.

20. The plant according to claim 19, said cutting means being constituted by two rotating, circular knives (230), said rotational axes of which are positioned on a level essentially perpendicular to the direction of conveyance of said product through said cutting station, said rotational axes being perpendicular to each other to provide said individual product with an essentially triangular cut having a top angle of 30°-120°, preferably 45°-105°, e.g. 90°.

21. The plant according to any of the preceding claims, further comprising removal means (240) for removing, preferably by suction, a part or an area of said product, said part or said area having been cut off by said cutting means.

22. The plant according to any of the preceding claims, said carrier means (210) comprising a driven belt (220) supporting a section of said non-supported part of said product.

23. The plant according to any of the preceding claims, further comprsing fluid-delivering means, said non-supported part of said product being supported by fluid delivered by said fluid-delivering means when said processing has been completed.

24. The plant according to any of the preceding claims, comprising positioning means for positioning said mandrel (210) and said cutting means in a given position in relation to a product.

25. The plant according to claim 24, said mandrel (210) and the cutting means being cardan-mounted.

26. A processed food product, such as fruit, vegetables, fish or meat being processed by the plant according to any of the claims 1-25 and having a part or an area of said individual product being cut off, characterized in sharp, mechanically produced cuts in said product, said cuts forming an essentially triangular cut in said individual product, said triangular cut being formed by two plane cuts forming an angle of 30°-120°, preferably 45°-105°, e.g. 90°, said cuts being interconnected in said product by a circular arc.

27. The processed food product according to claim 26, said food product being a herring, said gill area of which has been cut off, resulting in said essentially triangular cut formed by plane, mechanically produced cuts interconnected by a circular arc, said herring thereafter being brine-cured to produce a so-called matie.

28. A method for processing food products, such as fruit, vegetables, fish or meat, comprising the steps of:
feeding said products successively to a feeding station (100),
transporting said products by transportation means along a transportation route from said feeding station (100), through a processing station (200) for the successive processing of said products, and further to a delivery station (300) for the delivery of said processed products, said transportation means being provided with conveyer means for said individual and successive conveyance of said products, and being provided with a first part (32) and a second part (34) which are mutually movable from a first position to a second position, in which first position said first (32) and second part (34) of said conveyer means together support a product, and in which second position a part or an area of a product is accessible at least partially, said conveyer means comprising individual conveyer units (30) each comprising said first (32) and second part (34), and positioned mutually equidistantly along said transportation route, serving as a support for said respective products, characterized in
successively processing said products in said processing station (200) comprising a cutting station by processing means including carrier means (210) carrying a non-supported part of a product through said cutting station (200) as a supported part of said product is carried through said cutting station (200) by said transportation means, said carrier means (210) being adapted to carry said non-supported part of said product through said cutting station (200) synchronously with said supported part of said product carried by said transportation means, said conveyer means during processing in said processing station (200) being moved from said first position to said second position for allowing said processing means to carry out said processing af said part or said area of a given product.

29. The method according to claim 28, said products being conveyed in an essentially continuous or intermittent movement, or alternatively a combination of a continuous and an intermittent movement.

30. The method according to claim 28 or 29, said conveyance of said individual parts of said conveyer unit (30) from said first position to said second position being carried out by actuator means in a first actuator process when said conveyer unit (30) by said transportation means is moved from said feeding station (100) to said processing station (200), and said conveyance of said parts of said conveyer unit (30) from said second position to said first position being carried out by actuator means in a second actuator process when said conveyer unit (30) is moved from said processing station (200) to said delivery station (300).

31. The method according to any of claims 28-30, whereby said products are positioned in given positions in relation to said conveyer means.

32. The method according to any of claims 28-31, whereby the position of a given product in relation to said conveyer means is registered by registration means (140) positioned upstreams in relation to said processing station (200).

33. The method according to any of claims 28-32, whereby characteristic features of said products are registered by means of registration means (140) positioned upstreams in relation to said processing station (200).

34. The method according to any of claim 33, whereby an individual sorting of said products is carried out in accordance with the registered feature of said individual product, upstreams or downstreams in relation to said processing station (200).

35. The method according to any of claims 32-34, said registration being carried out by optical registration means, preferably video registration means (142).

36. The method according to any of claims 28-35, whereby said transportation means is returned along a return route leading from said delivery station (300) to said feeding station (100), and whereby said conveyer means are cleaned immediately upstreams in relation to said feeding station (100).

37. The method according to any of claims 33-36, said processing means being positioned in relation to said accessible area in accordance with said registration.

## Patentansprüche

1. Einrichtung zur Behandlung von Nahrungsprodukten wie Obst, Gemüse, Fisch und Fleisch, enthaltend:
einen Rahmen mit einer Zuführungsstation (100) zur sukzessiven Zuführung von Produkten, einer Behandlungsstation (200) zur sukzessiven Behandlung von Produkten und einer Lieferstation (300) zur Lieferung von behandelten Produkten,
Transportmittel, die vom Rahmen unterstützt sind und einen Transportweg defineren, der sich von der Zuführungsstation (100) durch die Behandlungsstation (200) und weiter zur Lieferstation (300) erstreckt, für den Transport der Produkte von der Zuführungsstation (100) zur Behandlungsstation (200) und weiter von der Behandlungsstation (200) zur Lieferstation (300), wobei die Transportmittel mit Fördermitteln zur individuellen und sukzessiven Beförderung der Produkte versehen sind,
Behandlungsmittel, die von der Behandlungsstation (200) umfasst sind, zur sukzessiven Behandlung eines Teils oder eines Bereichs eines oder mehrerer Produkte,
Fördermittel, die einen ersten Teil (32) und einen zweiten Teil (34) umfassen, die von einer ersten Position zu einer zweiten Position gegenseitig bewegbar sind, in welcher ersten Position der erste (32) und der zweite (34) Teil der Fördermittel zusammen ein Produkt unterstützen, und in welcher zweiten Position der Teil oder der Bereich eines Produkts mindestens teilweise zugänglich ist, um die Behandlung des Teils oder des Bereichs eines gegebenen Produkts durch die Behandlungsmittel zu ermöglichen, wobei die Fördermittel individuelle Förderer (30) umfassen, wobei jeder den ersten (32) und den zweiten (34) Teil umfasst, und gegenseitig abstandsgetreu am Transportweg entlang positioniert sind, und wobei sie als eine Unterstützung der jeweiligen Produkte dienen, dadurch gekennzeichnet, dass
die Behandlungsstation (200) eine Schneidstation umfasst, und
die Behandlungsmittel Trägermittel (210) zum Tragen eines nicht unterstützten Teils eines Produkts durch die Schneidstation (200) enthalten, wobei ein unterstützter Teil des Produkts von den Transportmitteln durch die Behandlungsstation (200) getragen wird, wobei die Trägermittel (210) zum Tragen des nicht unterstützten Teils des Produkts durch die Behandlungsstation (200) synkron zum unterstützten Teil des Produkts angepasst sind, der von den Transportmitteln durch die Behandlungsstation getragen wird.

2. Einrichtung nach Anspruch 1, wobei die Transportmittel die Produkte in einer im wesentlichen ununterbrochenen Bewegung oder in einer diskontinuierlichen Bewegung oder alternativ in einer Kombination aus einer ununterbrochenen und einer diskontinuierlichen Bewegung fördern.

3. Einrichtung nach Anspruch 1 oder 2, wobei der individuelle Förderer (30) aus einem zweiteiligen Trog besteht, der einen ersten (32) und zweiten (34) Teil enthält, und der am Transportweg entlang in einer im wesentlichen horisontalen Position bewegbar ist.

4. Einrichtung nach einem der Ansprüche 1 bis 3, wobei die individuellen Teile des Förderers (30) miteinander verbunden sind.

5. Einrichtung nach Anspruch 4, wobei die individuellen Teile des Förderers (30) miteinander gelenkig verbunden sind.

6. Einrichtung nach Anspruch 4 oder 5, die ausserdem Antriebsmittel zur Bewegung der Teile des Förderers (30) von der ersten Position zur zweiten Position umfasst, wenn der Förderer (30) von den Transportmitteln von der Zuführungsstation (100) zur Behandlungsstation (200) bewegt wird, und zur Bewegung der Teile des Förderers (30) von der ersten Position zur zweiten Position, wenn der Förderer von den Transportmitteln von der Behandlungsstation (200) zur Lieferstation (300) bewegt wird.

7. Einrichtung nach Anspruch 6, wobei die Antriebsmittel einen Antriebsarm (201) enthalten, der gegenüber dem Transportweg ortsfest ist, um den individuellen Förderer (30) einzuschalten, damit die Bewegung der Teile des Förderes (30) von der ersten Position zur zweiten Position erzielt werden kann, und wobei der individuelle Förderer (30) Federmittel (40, 42, 44) zur Bewegung der Teile des Förderers (30) von der zweiten Position zur ersten Position nach Abkupplung des Antriebsarms (201) vom Förderer (30) enthält.

8. Einrichtung nach einem der vorhergehenden Ansprüche, wobei die Transportmittel aus einem oder mehreren Transportbändern bestehen.

9. Einrichtung nach einem der vorhergehenden Ansprüche, die ausserdem Positioniermittel umfasst, die vom Rahmen unterstützt und zur Positionierung der Produkte in einer gegebenen Position gegenüber den Fördermitteln angepasst sind.

10. Einrichtung nach einem der vorhergehenden Ansprüche, die ausserdem Registriermittel (140) umfasst, die vom Rahmen unterstützt und zur Registrierung der Position eines gegebenen Produkts gegenüber den Fördermitteln angepasst sind.

11. Einrichtung nach Anspruch 10, wobei die Registriermittel (140) zur Registrierung eines charakteristischen Merkmals des individuellen Produkts stromaufwärts gegenüber der Behandlungsstation (200) positioniert sind.

12. Einrichtung nach Anspruch 11, die ausserdem Sortiermittel umfasst, die stromaufwärts oder stromabwärts gegenüber der Behandlungsstation (200) positioniert und mit den Registriermitteln verbunden sind, um die Produkte gemäss den von den Registriermitteln registrierten, individuellen Merkmalen des Produkts individuell zu sortieren.

13. Einrichtung nach Anspruch 11 oder 12, die ausserdem mit den Registriermitteln (140) und Behandlungsmitteln verbundene Datenverarbeitungsmittel (400) sowie Umwandlermittel zur Umwandlung der von den Registriermitteln (140) durchgeführten Registrierung eines gegebenen Produkts in Daten zur Steuerung der Position der Behandlungsmittel gegenüber den Fördermitteln umfasst, um eine individuelle Behandlung des Produkts gemäss dem von den Registriermitteln registrierten Merkmal des Produkts zu erzielen.

14. Einrichtung nach Anspruch 13, wobei die Datenverarbeitungsmittel die durch Umwandlung der Registrierung eines gegebenen Produkts in Daten erzielten Daten mit Bezugsdaten vergleichen, die empirisch bestimmte Beziehungen festlegen, und zwar zwischen verschiedenen Merkmalen der individuellen Produkte und einem spezifischen Merkmal, das zu bestimmen ist, um den Teil oder den Bereich zu definieren, der von den Behandlungsmitteln zu behandeln ist.

15. Einrichtung nach einem der Ansprüche 9 bis 13, wobei die Registriermittel aus optischen Registriermitteln, vorzugsweise Videoregistriermitteln (142), bestehen.

16. Einrichtung nach einem der vorhergehenden Ansprüche, wobei der von den Transportmitteln definierte Transportweg einen Rückweg umfasst, der sich von der Lieferstation (300) zur Zuführungsstation (100) erstreckt, und auf dem die Fördermittel nach Lieferung der behandelten Produkte von der Lieferstation (300) zur Zuführungsstation (100) zurückgeschickt werden, und die ausserdem Reinigungsmittel umfasst, die vom Rahmen unterstützt und auf dem Rückweg unmittelbar stromaufwärts gegenüber der Zuführungsstation (100) positioniert sind.

17. Einrichtung nach einem der vorhergehenden Ansprüche, wobei die Trägermittel (210) einen Dorn umfassen, der mit einem Aussengewinde versehen ist, dessen Steigerung zusammen mit der Drehung des Dorns auf die Transportgeschwindigkeit der Transportmittel eingestellt wird, um die synchrone Beförderung des nicht unterstützten Teils des Produkts und des unterstützten Teils des Produkts zu erzielen.

18. Einrichtung nach Anspruch 17, wobei das freie Ende des Dorns mit einem ersten konischen Gewinde (211) versehen ist, von einem zylindrischen Abschnitt (212) gefolgt, der von einem konischen Abschnitt (213) gefolgt wird, und wobei die Schneidmittel in Verbindung mit dem letzteren konischen Abschnitt positioniert sind.

19. Einrichtung nach einem der vorhergehenden Ansprüche, wobei die Behandlungsmittel eine Schneidstation (200) umfassen, die Schneidmittel zum Abschneiden des Teils oder des Bereichs des individuellen Produkts enthält.

20. Einrichtung nach Anspruch 19, wobei die Schneidmittel aus zwei drehbaren, kreisförmigen Messern (230) bestehen, wobei deren Drehachsen auf einem Ebene im wesentlichen senkrecht zur Richtung der Beförderung des Produkts durch die Schneidstation positioniert sind, wobei die Drehachsen senkrecht zueinander sind, um das individuelle Produkt mit einem im wesentlichen dreieckigen Schnitt mit einem Spitzenwinkel von 30°-120°, vorzugsweise 45°-105°, z.B. 90° zu versehen.

21. Einrichtung nach einem der vorhergehenden Ansprüche, die ausserdem Beseitigungsmittel (240) zur Beseitigung, vorzugsweise durch Saugen, eines Teils oder eines Bereichs des Produkts umfasst, wobei der Teil oder der Bereich von den Schneidmitteln abgeschnitten worden ist.

22. Einrichtung nach einem der vorhergehenden Ansprüche, wobei die Trägermittel (210) einen getriebenen Band (220) umfassen, der einen Teil des nicht unterstützten Teils des Produkts unterstützt.

23. Einrichtung nach einem der vorhergehenden Ansprüche, die ausserdem Flüssigkeitszuführungsmittel umfasst, wobei der nicht unterstützte Teil des Produkts nach Durchführung der Behandlung durch die von den Flüssigkeitszuführungsmitteln gelieferte Flüssigkeit unterstützt wird.

24. Einrichtung nach einem der vorhergehenden Ansprüche, die Positioniermittel zur Positionerung des Dorns (210) und der Schneidmittel in einer gegebenen Position gegenüber einem Produkt umfasst.

25. Einrichtung nach Anspruch 24, wobei der Dorn (210) und die Schneidmittel kardanmontiert sind.

26. Nahrungsprodukt wie Obst, Gemüse, Fisch und Fleisch, das nach einem der vorhergehenden Ansprüche 1-25 von der Einrichtung behandelt wird, und wobei ein Teil oder ein Bereich des individuellen Produkts abgeschnitten wird, durch scharfe, mekanisch produzierte Schnitte in das Produkt gekennzeichnet, wobei die Schnitte einen im wesentlichen dreieckigen Schnitt in das individuelle Produkt bilden, wobei der dreieckige Schnitt von zwei ebenen Schnitten gebildet ist, die einen Winkel von 30°-120°, vorzugsweise 45°-105°, z.B. 90° bilden, wobei die Schnitte von einem kreisförmigen Bogen im Produkt miteinander verbunden sind.

27. Nahrungsprodukt nach Anspruch 26, wobei das Produkt ein Hering ist, dessen Kiemenbereich abgeschnitten worden ist, was zum im wesentlichen dreieckigen Schnitt führt, der von ebenen, mechanisch produzierten Schnitten gebildet ist, die von einem kreisförmigen Bogen miteinander verbunden sind, wobei der Hering danach in Lake eingelegt wird, um einen sogenannten Matjeshering zu produzieren.

28. Verfahren zur Behandlung von Nahrungsprodukten wie Obst, Gemüse, Fisch und Fleisch, das folgende Schritte umfasst:
sukzessive Zuführung der Produkte zu einer Zuführungsstation (100),
Transport der Produkte durch Transportmittel an einem Transportweg entlang von der Zuführungsstation (100) durch eine Behandlungsstation (200) zur sukzessiven Behandlung der Produkte und weiter zu einer Lieferstation (300) zur Lieferung der behandelten Produkte, wobei die Transportmittel mit Fördermitteln zur individuellen und sukzessiven Beförderung der Produkte versehen sind und mit einem ersten Teil (32) und einem zweiten Teil (34) versehen sind, die von einer ersten Position zu einer zweiten Position gegenseitig bewegbar sind, in welcher ersten Position der erste (32) und der zweite Teil (34) der Fördermittel zusammen ein Produkt unterstützen, und in welcher zweiten Position ein Teil oder ein Bereich eines Produkts mindestens teilweise zugänglich ist, wobei die Fördermittel individuelle Förderer (30) umfassen, wobei jeder den ersten (32) und den zweiten (34) Teil umfasst, und gegenseitig abstandsgetreu am Transportweg entlang positioniert sind, wobei sie als eine Unterstützung des jeweiligen Produkts dienen, gekennzeichnet durch
sukzessive Behandlung der Produkte in der Behandlungsstation (200), die eine Schneidstation umfasst, durch Behandlungsmittel, die Trägermittel (210) zum Tragen eines nicht unterstützten Teils eines Produkts durch die Schneidstation (200) enthalten, wobei ein unterstützter Teil des Produkts von den Transportmitteln durch die Schneidstation getragen wird, wobei die Trägermittel (210) zum Tragen des nicht unterstützten Teils des Produkts durch die Schneidstation (200) synkron zum unterstützten Teil des Produktes angepasst sind, der von den Transportmitteln getragen wird, wobei die Fördermittel während der Behandlung in der Behandlungsstation (200) von der ersten Position zur zweiten Position bewegt werden, um die Behandlung des Teils oder des Bereichs eines gegebenen Produkts durch die Behandlungsmittel zu ermöglichen.

29. Verfahren nach Anspruch 28, wobei die Produkte in einer im wesentlichen ununterbrochenen oder diskontinuierlichen Bewegung oder alternativ in einer Kombination aus einer ununterbrochenen und einer diskontinuierlichen Bewegung gefördert werden.

30. Verfahren nach Anspruch 28 or 29, wobei die Beförderung der individuellen Teile des Förderers (30) von der ersten Position zur zweiten Position durch Antriebsmittel in einem ersten Antriebsvorgang durchgeführt wird, wenn der Förderer (30) von den Transportmitteln von der Zuführungsstation (100) zur Behandlungsstation (200) bewegt wird, und wobei die Beförderung der Teile des Förderers (30) von der zweiten Position zur ersten Position durch Antriebsmittel in einem zweiten Antriebsvorgang durchgeführt wird, wenn der Förderer (30) von der Behandlungsstation (200) zur Lieferstation (300) bewegt wird.

31. Verfahren nach einem der Ansprüche 28 bis 30, bei dem die Produkte in gegebenen Positionen gegenüber den Fördermitteln positioniert sind.

32. Verfahren nach einem der Ansprüche 28 bis 31, bei dem die Position eines gegebenen Produkts gegenüber den Fördermitteln von Registriermitteln (140) registriert wird, die stromaufwärts gegenüber der Behandlungsstation (200) positioniert sind.

33. Verfahren nach einem der Ansprüche 28 bis 32, bei dem die Merkmale der Produkte von Registriermitteln (140) registriert werden, die stromaufwärts gegenüber der Behandlungsstation (200) positioniert sind.

34. Verfahren nach Anspruch 33, bei dem eine individuelle Sortierung der Produkte gemäss dem registrierten Merkmal des individuellen Produkts durchgeführt wird, stromaufwärts oder stromabwärts gegenüber der Behandlungsstation (200).

35. Verfahren nach einem der Ansprüche 32 bis 34, wobei die Registrierung von optischen Registriermitteln, vorzugsweise Videoregistriermitteln (142), durchgeführt wird.

36. Verfahren nach einem der Ansprüche 28 bis 35, bei dem die Transportmittel auf einem Rückweg zurückgeschickt werden, der sich von der Lieferstation (300) zur Zuführungsstation (100) erstreckt, und wobei die Fördermittel unmittelbar stromaufwärts gegenüber der Zuführungsstation (100) gereinigt werden.

37. Verfahren nach einem der Ansprüche 33 bis 36, wobei die Behandlungsmittel gemäss der Registrierung gegenüber dem zugänglichen Bereich positionert sind.

## Revendications

1. Une installation pour le traitement de produits alimentaires, tels que du fruit, des legumes, du poisson ou de la viande, comprenant
un cadre comportant une station d'alimentation (100) pour l'alimentation succesive des produits, une station de traitement (200) pour le traitement succesif des produits, et un point de livraison (300) pour la livraison des produits traités,
moyens de transport soutenus par ledit cadre et définant une voie de transport qui s'étend de ladite station d'alimentation (100) à travers ladite station de traitement (200) et ensuite audit point de livraison (300), pour transporter lesdits produits de ladite station d'alimentation (100) à ladite station de traitement (200) et encore de ladite station de traitement (200) au dit point de livraison (300), lequel moyen de transport étant muni de moyens convoyeurs pour le transport individuel et succesif desdits produits,
moyens de traitement comprenant ladite station de traitement (200) pour le traitement succesif d'une partie ou une portion d'un ou plusieurs produits,
moyens convoyeurs comprenant une première partie (32) et une deuxième partie (34) étant mutuellement déplaçable d'une première position à une deuxième position, dans quelle première position ladite première (32) et deuxième (34) partie desdits moyens convoyeurs ensemble soutiennent un produit, et dans quelle deuxième position ladite partie ou ladite portion d'un produit est au moins partiellement accessible pour permettre audit moyen de traitement d'effectuer ledit traitement de ladite partie ou ladite portion d'un produit donné, en ce que les moyens convoyeurs comprennent des unités de transport individuelles (30), chacune comprenant ladite première (32) et ladite deuxième partie (34), positionnées à la même distance mutuelle le long de ladite voie de transport et servant de soutien auxdits produits respectifs, caractérisé par
ladite station de traitement (200) comprenant une station de coupe, et
lesdits moyens de traitement comportant un moyen transporteur (210) pour conduire une partie non-soutenue d'un produit à travers ladite station de coupe (200), en ce qu'une partie soutenue du dit produit est conduite à travers ladite station de traitement (200) par lesdits moyens de transport, ledit moyen transporteur (210) étant adapté à conduire ladite partie non-soutenue dudit produit à travers ladite station de traitement (200) synchroniquement avec ladite partie soutenue dudit produit étant conduit à travers ladite station de traitement par lesdits moyens de transport.

2. L'installation selon la revendication 1, caracterisée par le fait que les moyens de transport transportent lesdits produits d'un mouvement essentiellement continu ou d'un mouvement intermittent, ou alternativement une combination d'un mouvement continu et intermittent.

3. L'installation selon l'une quelconque des revendications 1 ou 2, caracterisé par le fait que l'unité convoyeur individuelle (30) soit constitué d'une trémie bipartite comportant ladite première (32) et deuxième partie (34) et étant déplaçable par lesdits moyens de transport le long de la dite voie de transport dans une position essentiellement horisontale.

4. L'installation selon l'une quelconque des revendications 1 à 3, caracterisée par le fait que les parties individuelles de la dite unité convoyeur (30) soient interconnectées.

5. L'installation selon la revendication 4, caracterisée par le fait que les parties individuelles de la dite unité convoyeur (30) soient jointes par charnière.

6. L'installation selon les revendications 4 ou 5, comprenant en outre un moyen actionneur pour déplacer lesdites parties desdites unités convoyeurs individuelles (30) de ladite première position à ladite deuxième position lorsque ladite unité convoyeur (30) est déplacée par ledit moyen de transport de ladite station d'alimentation (100) à ladite station de traitement (200), et pour déplacer lesdites parties de ladite unité convoyeur (30) de ladite deuxième position à ladite première position lorsque ladite unité convoyeur (30) est déplacée par lesdits moyens de transport de ladite station de traitement (200) au point de livraison (300).

7. L'installation selon la revendication 6, caracterisée par le fait que le moyen actionneur comporte un bras actionneur (201) qui est fixe par rapport à ladite voie de transport de manière à engager ladite unité convoyeur individuelle (30) pour obtenir ledit mouvement des dites parties de ladite unité convoyeur (30) de ladite première position à ladite deuxième position, et ladite unité convoyeur individuelle (30) comportant des moyens ressorts (40, 42, 44) pour déplacer lesdites parties de ladite unité convoyeur (30) de ladite deuxième position à ladite première position après dégagement dudit bras actionneur (201) de ladite unité convoyeur (30).

8. L'installation selon l'une quelconque des revendications précédentes, caracterisée par le fait que le moyen de transport soit constitué par une ou plusieurs bandes de transport.

9. L'installation selon l'une quelconque des revendications précédentes, comprenant en outre des moyens de positionnement soutenus par ledit cadre et adaptés pour positionner lesdits produits dans une position donnée par rapport auxdits moyens convoyeurs.

10. L'installation selon l'une quelconque des revendications précédentes, comprenant en outre des moyens d'enregistrement (140) soutenus par ledit cadre et adaptés pour enregistrer ladite position d'un produit donné par rapport auxdits moyens convoyeurs.

11. L'installation selon la revendication 10, caracterisée par le fait que le moyen d'enregistrement (140) soit positionné en amont par rapport à ladite station de traitement (200) pour l'enregistrement d'une particularité caractéristique dudit produit individuel.

12. L'installation selon la revendication 11, comprenant en outre des moyens de triage positionnés en amont ou en aval par rapport à ladite station de traitement (200) et connectés audit moyen d'enregistrement pour trier lesdits produits individuellement selon les particularités individuelles desdits produits enregistrés par lesdits moyens d'enregistrement.

13. L'installation selon l'une quelconque des revendications 11 ou 12, comprenant en outre des moyens de traitement de données (400) connectés audit moyen d'enregistrement (140) et auxdits moyens de traitement et comprenant des moyens convertisseurs pour transformer l'enregistrement d'un produit donné effectué par ledit moyen d'enregistrement (140) en des données, pour contrôler la position desdits moyens de traitement par rapport auxdits moyens convoyeurs pour obtenir un traitement individuel dudit produit selon ladite particularité dudit produit enregistrée par ledit moyen d'enregistrement (140).

14. L'installation selon la revendication 13, caracterisée par le fait que lesdits moyens de traitement de données comparent les données obtenues en transformant en données l'enregistrement d'un produit donné avec des paramètres de référence determinant des relations determinées de façon empirique entre des particularities différentes desdits produits individuels et une particularité spécifique à être déterminé pour definir ladite partie ou ladite portion à traiter par ledit moyen de traitement.

15. L'installation selon l'une quelconque des revendications 9 à 13, caracterisée par le fait que le moyen d'enregistrement soit constitué de moyens d'enregistrement optiques, préférablement des moyens d'enregistrement video (142).

16. L'installation selon l'une quelconque des revendications précédentes, ladite voie de transport definée par par lesdits moyens de transport comprenant une voie de retour s'étendant dudit point de livraison (300) à ladite station d'alimentation (100) et le long de laquelle lesdits moyens convoyeurs sont retournés dudit point de livraison (300) à ladite station d'alimentation (100) après livraison desdits produits traités, et en outre comprenant des moyens de nettoyage soutenus par ledit cadre et positionnés à ladite voie de retour immédiatement en amont par rapport à ladite station d'alimentation (100).

17. L'installation selon l'une quelconque des revendications précédentes, caracterisée par le fait que le moyen transporteur (210) comprenne un mandrin muni d'un fil extérieur, lequel pas qui, avec la rotation dudit mandrin, est ajusté au taux de rémunération de transport dudit moyen de transport pour obtenir ledit transport synchrone de ladite partie non-soutenue dudit produit et ladite partie soutenue dudit produit.

18. L'installation selon la revendication 17, caracterisée en ce que le libre extrémité engrenant dudit mandrin soit muni d'un premier fil conique (211), suivi par une section cylindrique (212) qui est à son tour suivie d'une section conique (213), et que les moyens de coupe soient positionnés en relation avec ladite section conique mentionnée en dernier (213).

19. L'installation selon l'une quelconque des revendications précédentes, caracterisée par le fait que les moyens de traitement comprennent une station de coupe (200) comportant des moyens de coupe pour ôter par coupage ladite partie ou ladite portion dudit produit individuel.

20. L'installation selon la revendication 19, caracterisée par le fait que les moyens de coupe soient constitués de deux couteaux tournants et circulaires (230), lesquels axes tournants étant positionnés à un niveau essentiellement perpendiculaire à la direction de transport dudit produit à travers ladite station de coupe, lesdits axes tournants étant perpendiculaire l'un à l'autre pour munir ledit produit individuel d'une coupe essentiellement triangulaire ayant un angle de sommet de 30° à 120°, préférablement 45° à 105°, par example 90°.

21. L'installation selon l'une quelconque des revendications précédentes, comprenant en outre des moyens de suppression (240) pour supprimer, préférablement par aspiration, une partie ou une portion dudit produit, ladite partie ou ladite portion ayant été enlevée par lesdits moyens de coupe.

22. L'installation selon l'une quelconque des revendications précédentes, caracterisée par le fait que le moyen transporteur (210) comprenant une courroie (220) qui soutient une section de ladite partie non-soutenue dudit produit.

23. L'installation selon l'une quelconque des revendications précédentes, comprenant en outre des moyens de livraison de fluide, ladite partie non-soutenue dudit produit étant soutenue par du fluide livré par lesdits moyens de livraison de fluide lorsque le dit traitement a été achevé.

24. L'installation selon l'une quelconque des revendications précédentes, comprenant des moyens de positionnement pour positioner ledit mandrin (210) et lesdits moyens de coupe dans une position donnée par rapport à un produit.

25. L'installation selon la revendication 24, caracterisée par le fait que le dit mandrin (210) et les moyens de coupe soient montés au cardan.

26. Un produit alimentaire traité, tel que du fruit, des legumes, du poisson ou de la viande, traité par l'installation selon l'une quelconque des revendications 1 à 25 et dont une partie ou une portion dudit produit individuel a été ôtée par coupage, caracterisé par des coupes aiguës produites mechaniquement dans ledit produit, les coupes formant une coupe essentiellement triangulaire dans ledit produit individuel, ladite coupe triangulaire étant formée de deux coupes planes formant une angle de 30° à 120°, préférablement de 45° à 105°, par example 90°, lesdites coupes étant interconnectées dans ledit produit par un arc circulaire.

27. Le produit alimentaire traité selon la revendication 26, caracterisé par le fait que le produit alimentaire soit un hareng dont la zone des ouïes a été ôtée par coupage ayant pour résultat ladite coupe essentiellement triangulaire formée par des coupes planes, produites mechaniquement et interconnectées par un arc circulaire, après quoi le hareng est préparé en saumure afin de produire ce que l'on nomme un hareng gras.

28. Une méthode pour traiter des produits alimentaires, tels que du fruit, des legumes, du poisson ou de la viande, comportant les mesures suivantes:
alimentanter lesdits produits succesivement à une station d'alimentation (100),
transporter lesdits produits par des moyens de transport le long d'une voie de transport de ladite station d'alimentation (100), à travers une station de traitement (200) pour le traitement succesif desdits produits, et ensuite à un point de livraison (300) pour la livraison desdits produits traités, lesdits moyens de transport étant munis de moyens convoyeurs pour ledit moyen de transport individuel et succesif desdits produits, et étant munis d'une première partie (32) et une deuxième partie (34) qui sont mutuellement déplacables d'une première position à une deuxième position, dans quelle première position ladite première (32) et deuxième partie (34) desdits moyens convoyeurs ensemble soutiennent un produit, et dans quelle deuxième position une partie ou une portion d'un produit est accessible au moins partiellement, lesdits moyens convoyeurs comprenant des unités convoyeurs individuelles (30), chacune d'entre elles comprenant ladite première (32) et deuxième partie (34), et positionnées mutuellement avec la même distance entre elles le long de ladite voie de transport, servant de soutien auxdits produits respectifs, caracterisé par
le traitement succesif desdits produits dans ladite station de traitement (200), comprenant une station de coupe par des moyens de traitement comportant des moyens transporteurs (210) transportant une partie non-soutenue d'un produit à travers ladite station de coupe (200), étant donné qu'une partie soutenue dudit produit soit transportée à travers ladite station de coupe (200) par ledit moyen de transport, lesdits moyens transporteurs (210) étant adaptés à porter ladite partie non-soutenue dudit produit à travers ladite station de coupe (200) synchroniquement avec ladite partie soutenue dudit produit transportée par lesdits moyens transporteurs, lesdits moyens convoyeurs, durant le traitement dans ladite station de traitement (200), étant deplacés de ladite première position à ladite deuxième position pour permettre auxdits moyens de traitement d'effectuer ledit traitement de ladite partie ou ladite portion d'un produit donné.

29. La méthode selon la revendication 28, caracterisée par le fait que lesdits produits soient transportés en un mouvement essentiellement continu ou intermittent, ou alternativement en une combination d'un mouvement continu et intermittent.

30. La méthode selon les revendications 28 ou 29, ledit moyen de transport desdites parties individuelles de ladite unité convoyeur (30) de ladite première position à ladite deuxième position étant effectué par des moyens actionneurs dans un premier processus actionneur lorsque ladite unité convoyeur (30) est deplacée par lesdits moyens de transport, de ladite station d'alimentation (100) à ladite station de traitement (200), et ledit moyen de transport desdites parties de ladite unité convoyeur (30) de ladite deuxième position à ladite première position étant effectué par des moyens actionneurs dans un deuxième processus actionneur lorsque ladite unité convoyeur (30) est deplacée de ladite station de traitement (200) audit point de livraison (300).

31. La méthode selon l'une quelconque des revendications 28 à 30, par laquelle lesdits produits sont positionnés en des positions données par rapport auxdits moyens convoyeurs.

32. La méthode selon l'une quelconque des revendications 28 à 31, par laquelle la position d'un produit donné par rapport auxdits moyens convoyeurs est enregistrée par des moyens d'enregistrement (140) positionnés en amont par rapport à ladite station de traitement (200).

33. La méthode selon l'une quelconque des revendications 28 à 32, par laquelle des particularités caractéristiques desdits produits sont enregistrées par moyen de moyens d'enregistrement (140) positionnés en amont par rapport à ladite station de traitement (200).

34. La méthode selon la revendication 33, par laquelle un triage individuel desdits produits est effectué conformément à la particularité enregistrée du dit produit indivduel, en amont ou en aval par rapport à ladite station de traitement (200).

35. La méthode selon l'une quelconque des revendications 32 à 34, ledit enregistrement étant effectué par des moyens d'enregistrement optique, préférablement des moyens d'enregistrement video (142).

36. La méthode selon l'une quelconque des revendications 28 à 35, par laquelle lesdits moyens de transport sont retournés le long d'une voie de retour menant dudit point de livraison (300) à ladite station d'alimentation (100), et par laquelle lesdits moyens convoyeurs sont nettoyés en amont immédiatement, par rapport à ladite station d'alimentation (100).

37. La méthode selon l'une quelconque des revendications 33 à 36, lesdits moyens de traitement étant positionnés par rapport à la portion accessible conformément audit enregistrement.
